Europäisches Patentamt

(19) European Patent Office

Office européen des brevets

(11) Numéro de publication: **0 154 588**
**B1**

(12) **FASCICULE DE BREVET EUROPÉEN**

(45) Date de publication du fascicule du brevet:
02.09.87

(51) Int. Cl.⁴: **F 16 L 19/08,** B 21 D 26/14,
B 23 K 20/06

(21) Numéro de dépôt: **85400370.4**

(22) Date de dépôt: **27.02.85**

(54) **Procédé de réalisation de raccords démontables et assurant l'étanchéité de conduites haute pression, et raccords ainsi constitués.**

(30) Priorité: **28.02.84 FR 8403059**

(43) Date de publication de la demande:
**11.09.85 Bulletin 85/37**

(45) Mention de la délivrance du brevet:
**02.09.87 Bulletin 87/36**

(84) Etats contractants désignés:
**BE CH DE GB IT LI NL SE**

(56) Documents cité:
**CH-A-576 326**
**FR-A-1 408 909**
**FR-A-2 450 145**
**GB-A-811 384**
**GB-A-1 365 815**
**GB-A-2 086 284**

(73) Titulaire: **ELECTRICITE DE FRANCE Service National, 2, rue Louis Murat, F-75008 Paris (FR)**

(72) Inventeur: **Darbois, Claudine, 7, Résidence de la Pépinière, F-92350 Le Plessis- Robinson (FR)**

(74) Mandataire: **Fort, Jacques, CABINET PLASSERAUD 84, rue d'Amsterdam, F-75009 Paris (FR)**

LIBER, STOCKHOLM 1987

## Description

L'invention a pour objet un procédé de réalisation de raccords étanches démontables entre un tube et un manchon, raccords du type comportant une olive rendue solidaire de la partie terminale du tube et un écrou présentant une liaison filetée avec le manchon et comportant des moyens pour déformer l'olive et l'amener en appui étanche contre une face interne du manchon lorsque l'écrou est vissé sur le manchon.

Ce procédé est, à l'heure actuelle, largement utilisé pour raccorder de façon étanche des conduites métalliques, et notamment des conduites de petit diamètre (quelques millimètres à quelques dizaines de millimètres) devant supporter des pressions internes élevées.

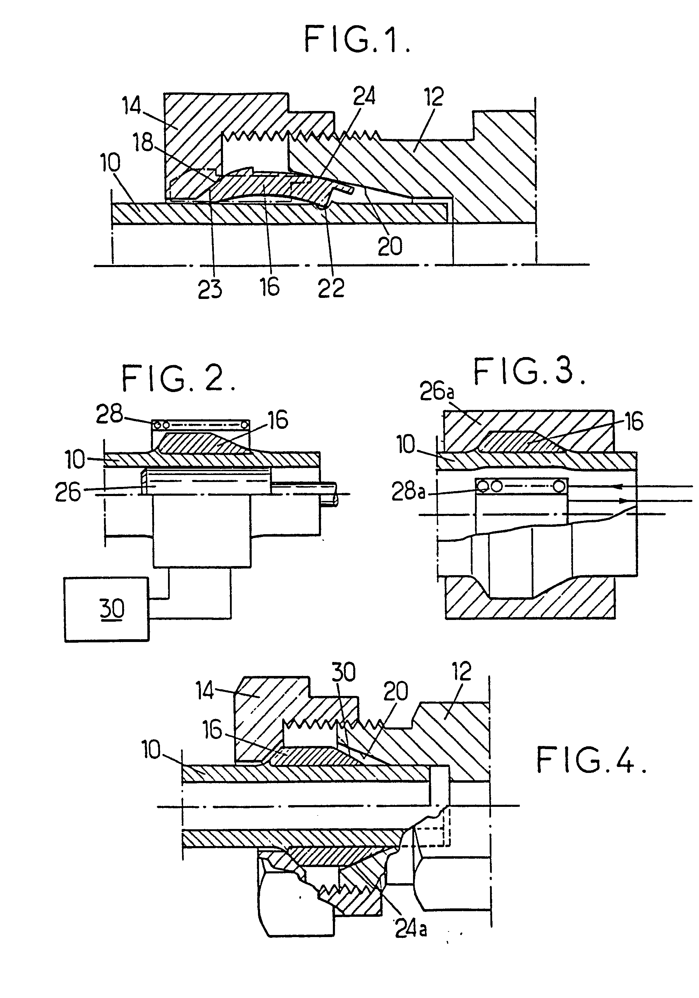

Deux solutions sont couramment utilisées pour rendre solidaire l'olive du tube. Une première solution consiste à sertir l'olive sur le tube. On peut alors notamment utiliser une olive en matériau élastomère sertie à l'aide d'une bague métallique. La seconde solution consiste à utiliser une olive en un métal un peu plus dur que celui du tube (FR-A-1 408 909). Dans ce cas, lorsque l'olive est comprimée par l'écrou lors d'une première opération de pré-sertissage, elle s'incruste dans le tube et en reste ultérieurement solidaire. Le tube est prêt à être raccordé, muni d'un écrou, d'un manchon et de l'olive d'étanchéité pré-sertie. On peut par exemple dans ce cas utiliser une olive en laiton lorsque le tube est en cuivre, une olive en acier traité lorsque le tube est en acier inoxydable. Dans ce dernier cas, une opération de pré-rainurage doit être soigneusement effectuée avant le pré-sertissage. La figure 1 montre un raccord étanche démontable mettant en oeuvre cette seconde solution. Le raccordement est à réaliser entre la partie terminale d'un tube 10 et un manchon 12 présentant un épaulement face à la tranche terminale du tube 10 et un filetage de réception d'un écrou 14. L'olive d'étanchéité 16 étant positionnée par le pré-sertissage sur le tube, l'écrou 14 est glissé sur le tube 10, un jeu subsiste entre ce dernier et l'épaulement du manchon 12 et l'écrou 14 est vissé. L'écrou 14 présente une surface interne évasée 18 qui vient prendre appui sur l'olive et applique cette dernière contre une face interne tronconique 20 du manchon. La pression ainsi exercée sur l'olive l'amène de la forme indiquée en traits mixtes à la forme indiquée en traits pleins sur la Figure 1. L'étanchéité est alors assurée, entre l'olive 16 et le tube 10, par l'ancrage suivant la ligne 22 et l'appui linéique suivant la ligne 23. Elle est assurée, entre l'olive 16 et le manchon 12, par appui dans la zone annulaire 24.

Ces solutions connues présentent différents inconvénients. Elles ne garantissent pas le sertissage définitif et fiable de l'olive après de nombreux démontages et remontages. L'étanchéité n'est obtenue que par des contacts pratiquement linéaires, ce qui est peu satisfaisant lorsque les pressions mises en jeu sont élevées. Avant le sertissage de l'olive d'étanchéité dans le cas d'un tube en acier inoxydable, deux opérations doivent être effectuées très soigneusement et font intervenir deux outils spécifiques: un rainureur dont la molette doit être en parfait état, et un bloc de pré-sertissage. Par ailleurs, il y a, au moins dans le cas du mode de réalisation montré en Figure 1, concentration d'efforts qui peut provoquer des micro-fissures du tube sur la ligne 22 et création de points de fatigue, favorisée par prérainurage du tube sur lequel vient se sertir l'olive. Le couple de serrage exercé doit être exactement dosé pour assurer l'étanchéité à l'aide d'une clé dynamométrique.

L'invention vise à réaliser un procédé de réalisation de raccord étanche démontable du type ci-dessus défini répondant mieux que ceux antérieurement connus aux exigences de la pratique, notamment en ce qu'il écarte les inconvénients ci-dessus, et en particulier garantit un sertissage de l'olive qui reste fiable à long terme.

Dans ce but, l'invention propose notamment un procédé dans lequel on rend solidaire l'olive du tube avant le serrage de l'écrou, de façon à assurer l'étanchéité du raccord et à former suivant le cas, de manière reproductible et précise, l'olive par formage électromagnétique.

On sait que le formage électromagnétique met en oeuvre l'énergie électromagnétique impulsionnelle créée par une décharge brève haute fréquence dans une bobine inductive d'une énergie électrique haute tension. Il comporte deux variantes, connues respectivement sous le nom de "magnétoformage" et "électroformage". Dans le cas du magnétoformage, un champ électromagnétique propulse la pièce à former, qui doit être constituée au moins en partie par un métal conducteur de l'électricité, à vitesse élevée, contre une autre pièce formant matrice dont elle épouse la forme. Dans le cas de l'électroformage ou formage électro-hydraulique, l'impulsion électrique est appliquée à un fil explosible placé dans un milieu isolant et incompressible. L'explosion crée une onde de choc qui est transmise, par le milieu incompressible, à la pièce à former pour provoquer l'expansion de cette dernière.

On choisira, parmi ces procédés de formage électromagnétique, celui qui sera le mieux adapté dans chaque cas particulier, en tenant compte notamment du diamètre de la conduite et de la nature des matériaux.

Dans le cas de conduites tubulaires de petit diamètre, de l'ordre d'une dizaine de millimètres et de quelques millimètres d'épaisseur, on utilisera avantageusement le sertissage de l'olive par rétreint à l'aide d'une bobine de magnétoformage. Cette solution sera notamment utilisable pour les conduites tubulaires ayant un diamètre extérieur de 12 mm, et d'épaisseur 2 mm (Ø 8-12), fonctionnant sous une pression comprise entre 200 et 400 bars, utilisées dans les circuits hydrauliques de commande.

Lorsque le diamètre du tube dépasse 20 mm, ce qui est le cas général dans les circuits de transmission de puissance, le sertissage peut être réalisé par expansion, avec une bobine de magnétoformage insérée dans le tube. Pour des diamètres plus faibles, le sertissage par expansion peut être conservé, mais cette fois par électroformage à l'aide d'un fil explosible placé dans le tube. Le sertissage par expansion avec une matrice de formage a l'avantage de réaliser en une seule opération le sertissage de l'olive sur le tube et sa mise en forme convenable à partir d'une ébauche réalisée avec des tolérances larges. La matrice de formage est plus facilement extractible que dans le cas précédent. Lors d'un tel formage, il n'y a pas d'allongement du tube: la matière est déplacée en épaisseur et cette déformation peut être judicieusement contrôlée (Figure 3). Cette technique garantit par ailleurs la conservation des qualités mécaniques des matériaux contraints (olive et tube) et même apporte un durcissement superficiel par écrouissage de la matière.

L'invention sera mieux comprise à la lecture de la description qui suit de modes particuliers d'exécution de l'invention donnés à titre d'exemples non limitatifs. La description se réfère aux dessins qui l'accompagnent, dans lesquels:
- la Figure 1, déjà mentionnée, montre un raccord d'étanchéité entre un tube et un manchon réalisés à l'aide d'un procédé suivant l'art antérieur,
- la Figure 2 montre schématiquement, en élévation et en demi-coupe, une bobine d'induction électromagnétique destinée à rétreindre par magnétoformage une olive sur un tube,
- la Figure 3, similaire à la Figure 2, correspond au cas d'un sertissage par expansion,
- la Figure 4 est une vue en coupe d'un raccord suivant l'invention, les pièces étant représentées, à la partie haute, dans la position qu'elles occupent avant serrage de l'écrou et, à la partie basse, dans la position après serrage. Un jeu doit exister entre l'extrémité du tube 10 et l'épaulement du manchon 12.

La Figure 2 montre schématiquement un mode de sertissage par rétreint d'une olive sur un tube 10, par magnétoformage. On insère tout d'abord dans le tube au droit de l'emplacement où doit être fixée l'olive 16 une matrice de formage 26 destinée à éviter l'écrasement du tube lors du sertissage. Cette matrice 26, constituée en matériau rigide, doit être extraite de l'assemblage après sertissage. Pour faciliter l'extraction, on pourra utiliser comme matrice un mandrin expansible. Une autre solution consiste à la réaliser sous forme d'une poche renfermant un fluide incompressible, ou encore à mettre un fluide incompressible, comme de l'huile, dans le tube, obstrué aux deux extrémités.

On glisse ensuite, sur le tube 10, l'olive 16 sans positionnement précis sur le tube et, enfin, on insère le tout dans une bobine d'induction électromagnétique 28 raccordée au générateur 30 prévu pour appliquer une décharge impulsive et intense d'énergie électrique. Le générateur 30 peut être constitué par des appareils connus, tels que ceux réalisés en France par le constructeur BARRAS-PROVENCE sous la dénomination "GIPE", dont le principe est décrit dans le brevet US-A-2 976 907.

Dans le cas de tubes présentant un diamètre plus important, dépassant 20 mm dans la pratique, on peut utiliser un sertissage magnéto-formé par expansion, comme indiqué sur la Figure 3. Dans ce cas, la bobine 28a est placée à l'intérieur du tube. Une matrice en plusieurs pièces assemblées 26a est placée autour de l'ébauche destinée à constituer l'olive 16 et du tube 10. Si le tube est en matériau mauvais conducteur, il peut être doublé par un propulseur en un métal bon conducteur tel que l'aluminium.

Cette solution a l'avantage de réaliser en une seule opération la mise en forme de l'olive 16 et son sertissage sur le tube à partir d'une ébauche pouvant être fabriquée avec des tolérances larges. En dépit de ces tolérances, la forme définitive de l'olive est extrêmement précise puisqu'elle répond à l'empreinte de la matrice.

Là encore, on peut utiliser un appareil de type connu, tel que celui déjà mentionné.

Le sertissage par expansion peut également être effectué par électroformage à l'aide d'un fil explosible placé dans le tube. Là encore, on peut utiliser un appareil du type déjà mentionné: la décharge impulsionnelle électrique du générateur dans le fil explosible crée une onde de choc dans le fluide incompressible situé à l'intérieur du tube et provoque l'expansion de celui-ci. Cette solution est un peu plus complexe à mettre en oeuvre que la précédente. En contrepartie, elle est utilisable même pour des diamètres intérieurs de tube inférieurs à 20 mm, et ne nécessite pas que le tube soit bon conducteur de l'électricité.

Le raccord mettant en oeuvre une olive d'un matériau rapporté sur une conduite haute pression et sertie par formage électromagnétique peut avoir la constitution montrée sur la Figure 4, où les organes correspondant à ceux de la Figure 1 sont désignés par le même numéro de référence. Pour assurer une bonne étanchéité, on donne à la surface interne 20 du manchon 12 une forme conique dont l'angle au sommet est légèrement inférieur, ou au plus égal, à l'angle de la face avant 30 de l'olive. Lorsque celle-ci est forcée contre le manchon 12 par vissage de l'écrou 14, la face avant 30 se déforme et vient s'appliquer contre la face 20 sur une zone annulaire de développement important 24a. Pour arriver à ce résultat, on constituera le manchon 12 en un matériau plus dur que l'olive 16. On constate ainsi que l'étanchéité sur chacun des contacts de l'olive (avec le manchon 12, le tube 10 et l'écrou 14) met en jeu des zones annulaires importantes, donc assure une grande sécurité, même à long terme. La nature du métal utilisé pour la réalisation de l'olive d'étanchéité est choisie de façon que l'élasticité de celle-ci permette l'étanchéité au serrage de l'écrou sur le manchon, à chaque démontage-montage, sans que ce serrage doive être strictement contrôlé. La grande sécurité de l'étanchéité entre le tube et l'olive vient aussi du fait que ce procédé confère à l'assemblage une résistance mécanique qui dépasse celle de la plus faible des pièces assemblées; par ailleurs, les efforts dûs au sertissage sont parfaitement répartis et il n'y a pas concentration d'efforts importants et, donc, de point de fatigue.

Cette technique de sertissage est par ailleurs très économique (1 à 10 kJ), très rapide (quelques dizaines de μs) et strictement reproductible; les tolérances de l'olive d'étanchéité formée et sertie sont très précises.

L'invention est par ailleurs susceptible d'un très grand nombre d'applications, aussi bien dans le domaine des circuits de commande que dans celui de la transmission de puissance, ou celui des canalisations hydrauliques, dans des installations fixes, telles que des appareillages de poste du réseau public de distribution d'électricité, ou des engins mobiles.

**Revendications**

1. Procédé de réalisation de raccord démontable et permettant d'assurer l'étanchéité de conduites haute pression entre un tube (10) et un manchon (12), raccord comportant une olive (16) entourant la partie terminale du tube et un écrou (14) présentant une liaison filetée avec le manchon et comportant des moyens pour déformer l'olive et l'amener en appui étanche contre une face interne du manchon lorsque l'écrou est vissé sur le manchon, caractérisé en ce que, avant le serrage de l'écrou, l'olive est rendue solidaire du tube par formage électromagnétique, de façon à assurer l'étanchéité du raccord par contact surfacique.

2. Procédé selon la revendication 1, caractérisé en ce que, l'olive étant au moins partiellement en matériau conducteur, on rétreint l'olive par magnétoformage sur le tube après avoir introduit une matrice amovible de formage (26) dans ce dernier.

3. Procédé selon la revendication 1, caractérisé en ce que, le tube étant en matériau conducteur ou doublé par un propulseur en matériau conducteur, on forme et sertit l'olive sur le tube par magnétoformage contre une matrice extérieure amovible (26) à l'aide d'une bobine (28a) insérée dans le tube, permettant ainsi le formage, de manière reproductible et précise, de l'olive.

4. Raccord étanche démontable entre un tube (10) et un manchon (12), comportant une olive (16) solidaire de la partie terminale du tube et un écrou (14) présentant une liaison filetée avec le manchon et comportant des moyens pour déformer l'olive et l'amener en appui étanche contre une face interne du manchon lorsque l'écrou est vissé sur le manchon, caractérisé en ce que l'olive (16) est rendue solidaire du tube par formage électromagnétique, de manière à assurer l'étanchéité par contact surfacique.

5. Raccord étanche selon la revendication 4, caractérisé en ce que le manchon (12) présente une surface interne conique (20) d'angle au sommet au plus égal à l'angle d'une face conique (30), située en regard, de l'olive (16).

**Patentansprüche**

1. Verfahren zur Herstellung einer lösbaren Kupplung zur Verwirklichung einer Abdichtung von Hochdruckleitungen zwischen einem Rohr (10) und einer Muffe (12), enthaltend einen das Endstück des Rohrs umgebenden Dichtring (16) und eine in Gewindeverbindung mit der Muffe stehende Mutter (14) und enthaltend Mittel, die den Dichtring verformen und ihn in dichte Anlage an einer Innenfläche der Muffe bringen, wenn die Mutter auf die Muffe geschraubt wird, dadurch gekennzeichnet, daß der Dichtring vor dem Festziehen der Mutter durch elektromagnetische Formgebung mit dem Rohr derart fest verbunden wird, daß die Abdichtung der Kupplung durch Oberflächenkontakt gewährleistet ist.

2. Verfahren nach Anspruch 1, dadurch gekennzeichnet, daß der Dichtring wenigstens teilweise aus leitendem Material besteht, und daß man den Dichtring durch magnetische Formgebung auf das Rohr schrumpft, nachdem eine entfernbare Formgebungsmatrize (26) in letzteres eingeführt wurde.

3. Verfahren nach Anspruch 1, dadurch gekennzeichnet, daß das Rohr aus leitendem Material besteht oder durch ein Vortriebsmittel aus leitendem Material verkleidet ist, und daß man mittels einer in das Rohr eingesetzten Spule (28a) den Dichtring durch magnetische Formgebung auf eine entfernbare äußere Matrize (26) formt oder quetscht, wodurch eine reproduzierbare und genaue Formgebung des Dichtrings erfolgt.

4. Lösbare dichte Kupplung zwischen einem Rohr (10) und einer Muffe (12), enthaltend einen mit dem Endstück verbundenen Dichtring (16) und eine in Gewindeverbindung mit der Muffe stehende Mutter (14) und enthaltend Mittel, die den Dichtring verformen und ihn in dichte Anlage an einer Innenfläche der Muffe bringen, wenn die Mutter auf die Muffe geschraubt wird, dadurch gekennzeichnet, daß der Dichtring (16) durch elektromagnetische Formgebung mit dem Rohr derart fest verbunden ist, daß die Abdichtung durch Oberflächenkontakt gewährleistet ist.

5. Dichte Kupplung nach Anspruch 4, dadurch gekennzeichnet,

daß die Muffe (12) eine konische Innenfläche
(20) hat, deren Scheitelwinkel höchstens gleich
dem Winkel einer gegenüberliegenden konischen
Fläche (30) des Dichtrings (16) ist.

**Claims**

1. Process for forming a dismountable
connection and maintaining fluid tightness of
high pressure lines between a tube (10) and a
sleeve (12), said connection comprising an olive
(16) surrounding the end portion of the tube and
a nut (14) threadedly connected to the sleeve and
having means for deforming the olive and forcing
it sealingly against an internal face of the sleeve
when the nut is tightened on the sleeve,
characterized in that, before the nut is tightened,
the olive is secured to the tube by
electromagnetic forming whereby the connection
is rendered fluid tight by a contact over a surface.

2. Process according to claim 1, characterized
in that, the olive being at least partially of
electrically conducting material, the olive is
shrunk onto the tube by magnetoforming after a
removable forming die (26) has been inserted into
the latter.

3. Process according to claim 1, characterized
in that, the tube being of electrically conducting
material or lined with an electrically conducting
material driver, the olive is shaped and crimped
onto the tube by magnetoforming against a
removable external die (26) with a coil (28a)
inserted in the tube, for reproduceable and
accurate forming of the olive.

4. Dismountable fluid tight connection between
a tube (10) and a sleeve (12), comprising an olive
(16) securely fixed to the end portion of the tube
and a nut (14) having a threaded connection with
the sleeve and comprising means for deforming
the olive and forcing it sealingly against an
internal face of the sleeve when the nut is
tightened on the sleeve, characterized in that the
olive (16) is securely connected to the tube by
electromagnetic forming, whereby a sealing
contact is obtained over a surface.

5. Fluid tight connection according to claim 4,
characterized in that the sleeve (12) has a conical
inner surface (20) whose apex angle is at most
equal to the angle of a conical surface (30) of the
olive (16) which confronts the inner surface.

0 154 588

FIG.1.

FIG.2.

FIG.3.

FIG.4.

1